(19) Europäisches Patentamt
European Patent Office
Office européen des brevets

(11) **EP 4 610 301 A1**

(12) **EUROPEAN PATENT APPLICATION**
published in accordance with Art. 153(4) EPC

(43) Date of publication:
**03.09.2025 Bulletin 2025/36**

(21) Application number: **23882537.6**

(22) Date of filing: **20.10.2023**

(51) International Patent Classification (IPC):
**C08J 9/18** (2006.01)

(52) Cooperative Patent Classification (CPC):
**C08J 9/18**

(86) International application number:
**PCT/JP2023/037951**

(87) International publication number:
**WO 2024/090332 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 JP 2022170128**

(71) Applicant: **Kaneka Corporation
Osaka-shi, Osaka 530-8288 (JP)**

(72) Inventor: **MINAMI, Tetsuya
Settsu-shi, Osaka 566-0072 (JP)**

(74) Representative: **Vossius & Partner
Patentanwälte Rechtsanwälte mbB
Siebertstrasse 3
81675 München (DE)**

(54) **METHOD FOR PRODUCING ALIPHATIC POLYESTER-BASED FOAM PARTICLES**

(57) An object is to provide novel aliphatic polyester-based expanded particles having a low apparent density. The object is attained by a method for producing aliphatic polyester-based expanded particles, including: a dispersing step of, in a vessel, dispersing aliphatic polyester-based resin particles and a blowing agent into an aqueous dispersion medium; and a releasing step of releasing, by opening one end of the vessel, a dispersion slurry in the vessel into an area which has a pressure lower than a pressure inside the vessel and which has a specific temperature and a specific amount of steam.

## Description

Technical Field

The present invention relates to a method for producing aliphatic polyester-based expanded particles.

Background Art

Petroleum-derived plastics are disposed of in large quantities every year, and a shortage of landfill sites and environmental pollution due to these large quantities of waste are taken up as serious problems. In recent years, microplastics have been a major problem in a marine environment. Thus, biodegradable plastics degraded by the action of microorganisms (a) in the environment such as the sea and soil and (b) in landfill sites and compost have attracted attention.

Biodegradable plastics have been developed for a wide range of applications, including (a) agricultural, forestry, and fishery materials used in the environment and (b) food containers, packaging materials, sanitary materials, and garbage bags that are difficult to recycle and reuse after use. In addition, foamed products made from biodegradable plastic are expected to be used for, for example, cushioning materials for packaging, produce boxes, fish boxes, automotive components, building materials, and civil engineering materials.

Among the above-described biodegradable plastics, poly(3-hydroxyalkanoate) (hereinafter may be referred to as "P3HA") has attracted attention as a plastic derived from a plant material from the viewpoint of excellent biodegradability and carbon neutrality.

The development of techniques relating to biodegradable plastics has conventionally been pursued vigorously. For example, the techniques disclosed in Patent Literatures 1 and 2 are known.

Moreover, as a technique relating to polyethylene-based resin expanded particles, the technique disclosed in Patent Literature 3 is also known.

Citation List

[Patent Literature]

[Patent Literature 1]
WO2019/146555
[Patent Literature 2]
WO2021/002092
[Patent Literature 3]
WO2016/147775

Summary of Invention

Technical Problem

Here, expanded particles may be required to have a low apparent density, depending on use thereof.

In view of the above circumstances, an object of an embodiment of the present invention is to provide a novel method which is for producing aliphatic polyester-based expanded particles and which can provide aliphatic polyester-based expanded particles having a low apparent density.

Solution to Problem

That is, a method for producing aliphatic polyester-based expanded particles in accordance with an embodiment of the present invention is a method for producing aliphatic polyester-based expanded particles, including: a dispersing step of dispersing aliphatic polyester-based resin particles and a blowing agent into an aqueous dispersion medium, the aliphatic polyester-based resin particles containing an aliphatic polyester-based resin; and a releasing step of releasing, by opening one end of the vessel, a dispersion slurry in the vessel into an area having a pressure lower than a pressure inside the vessel, wherein a temperature in the area is 65°C to 95°C, and an amount of steam in the area is 144 g/m$^3$ to 502 g/m$^3$.

Aliphatic polyester-based expanded particles in accordance with an embodiment of the present invention are aliphatic polyester-based expanded particles which (i) contain an aliphatic polyester-based resin, (ii) do not contain a plasticizer or contain the plasticizer in an amount of more than 0 parts by weight and not more than 4 parts by weight with respect to 100 parts by weight of the aliphatic polyester-based resin, (iii) have a gel fraction of not less than 60% by weight, and (iv) have an apparent density of not more than 64 g/L.

An aliphatic polyester-based foamed molded product in accordance with an embodiment of the present invention is an aliphatic polyester-based foamed molded product which (i) contains an aliphatic polyester-based resin, (ii) does not contain a plasticizer or contains the plasticizer in an amount of more than 0 parts by weight and not more than 4 parts by weight with respect to 100 parts by weight of the aliphatic polyester-based resin, and (iii) has a gel fraction of not less than 50% by weight, and (iv) has a density of not more than 44 g/L.

Advantageous Effects of Invention

An aspect of the present invention makes it possible to provide novel aliphatic polyester-based expanded particles having a low apparent density.

Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment or example derived by combining technical means disclosed in differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

In the present specification, a repeating unit derived from an X monomer may be referred to as an "X unit". A repeating unit can also be described as a structural unit.

In the present specification, a "method for producing aliphatic polyester-based expanded particles" may be referred to as a "production method", and a "method for producing aliphatic polyester-based expanded particles in accordance with an embodiment of the present invention" may be referred to as "the present production method". In the present specification, "aliphatic polyester-based resin particles" may be referred to as "resin particles", "aliphatic polyester-based expanded particles" may be referred to as "expanded particles", "aliphatic polyester-based expanded particles in accordance with an embodiment of the present invention" may be referred to as "the present expanded particles", an "aliphatic polyester-based foamed molded product" may be referred to as a "foamed molded product", and an "aliphatic polyester-based foamed molded product in accordance with an embodiment of the present invention" may be referred to as "the present foamed molded product".

[1. Technical idea of an embodiment of the present invention]

The inventor of the present invention conducted diligent studies in order to obtain aliphatic polyester-based expanded particles having a low apparent density by a novel method that has not been conventionally known. In particular, the inventor of the present invention conducted diligent studies with focus not on a material nor composition for producing aliphatic polyester-based expanded particles but on a specific condition in a method for producing aliphatic polyester-based expanded particles.

As a result of the diligent studies, the inventor of the present invention uniquely found the following: in a step of releasing a dispersion slurry, which is obtained by dispersing aliphatic polyester-based resin particles in a vessel, into an area having a pressure lower than the pressure inside the vessel, the temperature in the area and the amount of steam in the area are set to fall within respective specific ranges, whereby it is surprisingly possible to lower the apparent density of resulting aliphatic polyester-based expanded particles. Consequently, the inventor of the present invention achieved the present invention.

[2. Method for producing aliphatic polyester-based expanded particles]

A method for producing aliphatic polyester-based expanded particles in accordance with an embodiment of the present invention includes: a dispersing step of dispersing aliphatic polyester-based resin particles and a blowing agent into an aqueous dispersion medium, the aliphatic polyester-based resin particles containing an aliphatic polyester-based resin; and a releasing step of releasing, by opening one end of the vessel, a dispersion slurry in the vessel into an area having a pressure lower than a pressure inside the vessel, wherein a temperature in the area is 65°C to 95°C and an amount of steam in the area is 144 g/m$^3$ to 502 g/m$^3$.

The present production method, which has the above configuration, has the advantage of being capable of providing aliphatic polyester-based expanded particles having a low apparent density.

Furthermore, since the aliphatic polyester-based resin that is a biodegradable resin is used in the present production method, resulting expanded particles and a foamed molded product obtained by molding the expanded particles enable a reduction in soil pollution which is caused by disposal thereof. This makes it possible to contribute to achieving, for example, Sustainable Development Goals (SDGs) such as Goal 12 "Ensure sustainable consumption and production patterns". Moreover, in a case where, among aliphatic polyester-based resins, a P3HA-based resin that also has marine degradability in addition to soil degradability is contained, resulting expanded particles and a foamed molded product obtained by molding the expanded particles enable a reduction in marine pollution which is caused by disposal thereof, in addition to soil pollution which is caused by disposal thereof. This makes it possible to contribute to also achieving, for example, Sustainable Development Goals (SDGs) such as Goal 14 "Conserve and sustainably use the oceans, seas and marine resources for sustainable development", in addition to Goal 12 "Ensure sustainable consumption and production patterns".

The following description will discuss materials (raw materials) used in the present production method, and then discuss each step of the present production method.

(2-1. Aliphatic polyester-based resin particles)

(Aliphatic polyester-based resin)

The resin particles contain the aliphatic polyester-based resin as a resin component. Specific examples of the aliphatic polyester-based resin include poly(3-hydroxyalkanoate)-based resins, polylactic acid, polybutylene succinate, polybutylene succinate adipate, polybutylene adipate terephthalate, polybutylene succinate terephthalate, and polycaprolactone. Among such aliphatic polyester-based resins, a poly(3-hydroxyalkanoate)-based resin that also has marine degradability in addition to soil degradability is preferable. In other words, the aliphatic polyester-based resin preferably includes a poly(3-hydroxyalkanoate)-based resin. Moreover, from the viewpoint of providing a foamed molded product that has excellent flexibility, the aliphatic polyester-based resin preferably includes polybutylene adipate terephthalate. That is, in an embodiment of the present invention, the resin particles contain, as an aliphatic polyester component, preferably a poly(3-hydroxyalkanoate)-based resin or polybutylene adipate terephthalate and more preferably a poly(3-hydroxyalkanoate)-based resin and polybutylene adipate terephthalate.

The aliphatic polyester-based resin includes, in 100% by weight of the aliphatic polyester-based resin, a poly(3-hydroxyalkanoate)-based resin in an amount of preferably not less than 50% by weight, more preferably not less than 60% by weight, more preferably not less than 70% by weight, more preferably not less than 80% by weight, even more preferably not less than 90% by weight, and still even more preferably not less than 95% by weight. Particularly preferably, the aliphatic polyester-based resin includes, in 100% by weight of the aliphatic polyester-based resin, 100% by weight of a poly(3-hydroxyalkanoate) resin. In other words, particularly preferably, the aliphatic polyester-based resin consists only of a poly(3-hydroxyalkanoate)-based resin. The aliphatic polyester-based resin including a poly(3-hydroxyalkanoate)-based resin in a larger amount has the advantage that resulting expanded particles and a resulting foamed molded product enable a reduction in marine pollution and/or soil pollution which is/are caused by disposal thereof.

(Poly(3-hydroxyalkanoate)-based resin)

The resin particles preferably contain a poly(3-hydroxyalkanoate)-based resin as a resin component. In the present specification, the "poly(3-hydroxyalkanoate)-based resin" may be referred to as "poly(3-hydroxyalkanoate)" or "P3HA". The P3HA will be described below.

The P3HA is a polymer having a 3-hydroxyalkanoate unit as an essential structural unit (monomer unit). In the present specification, "3-hydroxyalkanoate" may also be referred to as "3HA". Specifically, the P3HA is preferably a polymer including a repeating unit represented by the following general formula (1):

$$[-CHR-CH_2-CO-O-] ... \qquad (1)$$

In general Formula (1), R represents an alkyl group expressed by $C_nH_{2n+1}$, and n represents an integer of 1 to 15. Examples of R include linear or branched alkyl groups such as a methyl group, an ethyl group, a propyl group, an isopropyl group, a butyl group, an isobutyl group, a t-butyl group, a pentyl group, and a hexyl group. n is preferably 1 to 10, and more preferably 1 to 8.

As the P3HA, P3HA produced from a microorganism, in particular, is preferable. The P3HA produced from a microorganism is poly[(R)-3HA] in which 3HA units are all (R)-3HA.

The P3HA includes preferably not less than 50 mol% of 3HA units (in particular, the repeating unit of general formula (1)), more preferably not less than 70 mol% of 3HA units, and even more preferably not less than 80 mol% of 3HA units in 100 mol% of all repeating units of the P3HA. The repeating units (monomer units) included in the P3HA may be 3HA units only or may include, in addition to the 3HA units, a repeating unit derived from a monomer other than 3HA (e.g., a 4-hydroxyalkanoate unit and the like).

Specific examples of the 3HA units include a 3-hydroxybutyrate unit, a 3-hydroxyvalerate unit, and a 3-hydroxyhexanoate unit. 3-hydroxybutyrate is close to propylene in terms of a melting point and tensile strength. Therefore, the P3HA in accordance with an embodiment of the present invention preferably includes a 3-hydroxybutyrate unit. In the present specification, "3-hydroxybutyrate" may also be referred to as "3HB".

In a case where the P3HA includes two or more types of repeating units, a monomer that is derived from a repeating unit other than a repeating unit included in the highest amount in the P3HA is referred to as a comonomer. In the present specification, a "repeating unit derived from a comonomer" may also be referred to as a "comonomer unit".

The comonomer is not particularly limited, and is preferably 3-hydroxyhexanoate (hereinafter may be referred to as 3HH), 4-hydroxybutyrate (hereinafter may be referred to as 4HB), or the like.

The P3HA is preferably at least one selected from the group consisting of poly(3-hydroxybutyrate), poly(3-hydroxybutyrate-co-3-hydroxyvalerate), poly(3-hydroxybutyrate-co-3-hydroxypropionate), poly(3-hydroxybutyrate-co-3-hydroxyvalerate-co-3-hydroxyhexanoate), poly(3-hydroxybutyrate-co-3-hydroxyhexanoate), and poly(3-hydroxybutyrate-co-4-hydroxybutyrate). The above configuration makes it possible to more easily provide aliphatic polyester-based expanded particles in which a closed cell ratio thereof is high and which lead to excellent compressive strength of a resulting foamed molded product. Among these, poly(3-hydroxybutyrate-co-3-hydroxyhexanoate) (P3HB3HH) and poly(3-hydroxybutyrate-co-4-hydroxybutyrate) (P3HB4HB) are more preferable from the viewpoint of, for example, processability and the physical properties of a foamed molded product.

In an embodiment of the present invention, a method for producing the P3HA is not particularly limited, and may be a production method using chemical synthesis or may be a production method using a microorganism. Among these methods, a production method using a microorganism is preferable. For a P3HA production method using a microorganism, a known method can be employed, and preferably includes a culture process, a purification process, and a drying process.

A method for culturing, in the culture process, the microorganism that produces the P3HA is not particularly limited, and, for example, the method described in International Publication No. WO 2019/142717 can be used.

Specific examples of a bacterium that produces a copolymer of 3HB and another hydroxyalkanoate include *Aeromonas caviae,* which is a bacterium that produces P3HB3HV and P3HB3HH, and *Alcaligenes eutrophus,* which is a bacterium that produces P3HB4HB. In particular, regarding P3HB3HH, for example, an *Alcaligenes eutrophus* AC32 strain (*Alcaligenes eutrophus* AC32, FERM BP-6038) (T. Fukui, Y. Doi, J. Bateriol., 179, p. 4821-4830 (1997)) into which genes of a group of P3HA synthases have been introduced to increase productivity of P3HB3HH is more preferable. In a method for producing the P3HA, microorganism bacterial cells obtained by culturing microorganisms, such as an *Alcaligenes eutrophus* AC32 strain, under appropriate conditions and accumulating P3HB3HH in bacterial cells of the microorganisms are suitably used. Regarding the copolymer-producing bacterium, besides the above, a genetically modified microorganism into which various P3HA synthesis-related genes have been introduced may be used in accordance with the P3HA that is desired to be produced. In addition, regarding culture conditions for a microorganism (bacterium), various culture conditions including the type of substrate may be optimized in accordance with the P3HA that is desired to be produced.

A method for purifying, in the purification process, the P3HA obtained by microbial culture is not particularly limited, and a known physical treatment, and/or a known chemical treatment, and/or a known biological treatment may be employed. For example, a purification method described in International Publication No. WO 2010/067543 can be preferably employed.

A method for drying, in the drying process, the P3HA obtained by microbial culture and purification is not particularly limited, and spray drying, fluidized bed drying, flash drying, rotational drying, vibrational drying, and band drying can be employed. For example, a drying method described in International Publication No. WO 2018/070492 can be preferably employed.

(2-2. Additive(s))

The resin particles may further contain an additive(s) (other additive(s)) in addition to the aliphatic polyester-based resin. Examples of the other additive(s) include crosslinking agents, nucleating agents, cell adjusting agents, lubricants, plasticizers, antistatic agents, flame retardants, electrically conductive agents, heat insulating agents, antioxidants, ultraviolet ray absorbing agents, coloring agents, inorganic fillers, organic fillers, hydrolysis inhibitors, and non-ionic water-soluble polymers. One of these additives may be used alone, or two or more thereof may be used in admixture, according to various purposes. As the other additive(s), an additive(s) having biodegradability, in particular, is/are preferable.

Examples of the nucleating agents include pentaerythritol, orotic acid, aspartame, cyanuric acid, glycine, zinc phenylphosphonate, and boron nitride. One of these nucleating agents may be used alone, or two or more thereof may be used in admixture. In a case where two or more nucleating agents are used in admixture, a mixing ratio may be adjusted as appropriate according to the purpose.

Examples of the cell adjusting agents include talc, silica, calcium silicate, calcium carbonate, aluminum oxide, titanium oxide, diatomaceous earth, clay, sodium bicarbonate, alumina, barium sulfate, aluminum oxide, and bentonite. Among these cell adjusting agents, talc is preferable in that talc is particularly excellent in dispersibility in the aliphatic polyester-based resin. One of these cell adjusting agents may be used alone, or two or more thereof may be used in admixture. In a case where two or more cell adjusting agents are used in admixture, a mixing ratio may be adjusted as appropriate according to the purpose.

Examples of the lubricants include behenic acid amide, oleic acid amide, erucic acid amide, stearic acid amide, palmitic acid amide, N-stearylbehenic acid amide, N-stearylerucic acid amide, ethylenebisstearic acid amide, ethylenebisoleic acid amide, ethylenebiserucic acid amide, ethylenebislauryl acid amide, ethylenebiscapric acid amide, p-phenylenebisstearic acid amide, and a polycondensate of ethylenediamine, stearic acid, and sebacic acid. Among these lubricants, behenic acid amide and erucic acid amide are preferable in that the lubricant effect on the aliphatic polyester-based resin is particularly excellent.

Examples of the antistatic agents include coconut oil fatty acid diethanolamide. The amount of an antistatic agent contained in the resin particles is not particularly limited.

The resin particles preferably further contain a non-ionic water-soluble polymer, since it is possible to lower an apparent density and/or increase compatibility with the aliphatic polyester-based resin. In other words, the resin particles preferably contain a non-ionic water-soluble polymer. The non-ionic water-soluble polymer is a polymer that does not ionize to ions when dissolved in water.

(2-2. Resin particle preparing step)

The present production method preferably includes, before the dispersing step, a resin particle preparing step of preparing the aliphatic polyester-based resin particles containing the aliphatic polyester-based resin. The resin particle preparing step can also be described as a step of molding the resin into a shape that allows the resin to be easily utilized for expansion. An aspect of the resin particle preparing step is not particularly limited, provided that it is possible to obtain the resin particles. Examples of an aspect of the resin particle preparing step includes an aspect that includes: a melting and kneading step of melting and kneading a resin composition which contains the aliphatic polyester-based resin and other additive(s) which is/are optionally used; and a particle molding step of molding the melted and kneaded resin composition into a shape that allows the resin composition to be easily utilized for expansion.

In the melting and kneading step, a temperature at the time when the resin composition is melted and kneaded cannot be generally defined because the temperature depends on, for example, the physical properties (melting point, weight average molecular weight, etc.) of the aliphatic polyester-based resin and the type(s) of the additive(s) used. With regard to the temperature at the time when the resin composition is melted and kneaded, for example, the temperature of the resin composition which has been melted and kneaded and which is discharged from a nozzle of a die (hereinafter may be referred to as a composition temperature) is preferably 150°C to 200°C, more preferably 160°C to 195°C, and even more preferably 170°C to 190°C. In a case where the composition temperature is not lower than 150°C, it is unlikely that the resin composition is insufficiently melted and kneaded. On the other hand, in a case where the composition temperature is not higher than 200°C, pyrolysis of the aliphatic polyester-based resin is unlikely to occur.

An aspect of the particle molding step is not particularly limited, provided that it is possible to mold the melted and kneaded resin composition into a desired shape. The use of a melting and kneading device including a die and a cutting device as the above-described melting and kneading device makes it possible to easily mold the melted and kneaded resin composition into a desired shape in the particle molding step. Specifically, it possible to mold the melted and kneaded resin composition into a desired shape, by discharging the melted and kneaded resin composition from a nozzle of the die provided to the melting and kneading device and cutting the resin composition with use of the cutting device simultaneously with or after the discharge. The shape of the obtained resin particles is not particularly limited, and is preferably a cylindrical shape, an elliptical columnar shape, a spherical shape, a cubic shape, a rectangular parallelepiped shape, or the like because the resin particles having such a shape are easily utilized for expansion.

In the particle molding step, the resin composition discharged from the nozzle of the die may be cooled. In a case where the resin composition discharged from the nozzle of the die is cooled, the resin composition may be cut with use of the cutting device simultaneously with or after the cooling of the resin composition.

(2-3. Dispersing step)

The dispersing step is a step of, in a vessel, dispersing, into the aqueous dispersion medium, (a) the aliphatic polyester-based resin particles containing the aliphatic polyester-based resin, (b) the blowing agent, and, as necessary, (c) a crosslinking agent, a dispersing agent, a crosslinking aid, a dispersing aid, and/or a plasticizer. The dispersing step can also be described as a step of, in a vessel, preparing the dispersion slurry in which (a) the aliphatic polyester-based resin particles containing the aliphatic polyester-based resin, (b) the blowing agent, and, as necessary, (c) a crosslinking agent, a dispersing agent, a crosslinking aid, a dispersing aid, and/or a plasticizer are dispersed. In the dispersion slurry, (a) the crosslinking agent and the crosslinking aid may not be present as a result of being consumed in a reaction with the aliphatic polyester-based resin contained in the resin particles, and (b) the blowing agent and the plasticizer may not be present in a dispersed state as a result of being impregnated into the resin particles.

The vessel is not particularly limited, and is preferably a vessel that can withstand an expansion temperature and an expansion pressure which will be described later, and is preferably, for example, a pressure-resistant vessel.

The aqueous dispersion medium is not particularly limited, provided that the aqueous dispersion medium allows at least the resin particles and the blowing agent to be uniformly dispersed therein. As the aqueous dispersion medium, for example, tap water and/or industrial water can also be used. From the point that stable production of expanded particles is possible, pure water, such as RO water (water purified by a reverse osmosis membrane method), distilled water, and deionized water (water purified by ion exchange resin), ultrapure water, and the like are preferably used as the aqueous dispersion medium.

Examples of the blowing agent include: inorganic gases such as nitrogen, carbon dioxide, and air; saturated hydrocarbons each having 3 to 5 carbon atoms such as propane, normal butane, isobutane, normal pentane, isopentane, and neopentane; ethers such as dimethyl ether, diethyl ether, and methyl ethyl ether; halogenated hydrocarbons such as monochlormethane, dichloromethane, and dichlorodifluoroethane; and water. As the blowing agent, at least one selected from the group consisting of the above-listed inorganic gases, saturated hydrocarbons each having 3 to 5 carbon atoms, ethers, halogenated hydrocarbons, and water can be used. Among these blowing agents, nitrogen or carbon dioxide is preferably used as the blowing agent from the viewpoint of an environmental load and expansion power. One of these blowing agents may be used alone, or two or more thereof may be used in admixture. In a case where two or more blowing agents are used in admixture, a mixing ratio may be adjusted as appropriate according to the purpose.

In the present production method, it is preferable to use the dispersing agent. The use of the dispersing agent has an advantage of making it possible to inhibit adhesion of the resin particles to each other and making it possible to produce expanded particles stably. Examples of the dispersing agent include inorganic substances such as tertiary calcium phosphate, tertiary magnesium phosphate, basic magnesium carbonate, calcium carbonate, barium sulfate, kaolin, talc, clay, aluminum oxide, titanium oxide, and aluminum hydroxide. One of these dispersing agents may be used alone, or two or more thereof may be used in admixture. In a case where two or more dispersing agents are used in admixture, a mixing ratio may be adjusted as appropriate according to the purpose.

In the present production method, the dispersing aid may be used to improve the effect of inhibiting the adhesion of the resin particles to each other. Examples of the dispersing aid include anionic surfactants such as sodium alkanesulfonate, sodium alkylbenzene sulfonate, and sodium $\alpha$-olefin sulfonate. One of these dispersing aids may be used alone, or two or more thereof may be used in admixture. In a case where two or more dispersing aids are used in admixture, a mixing ratio may be adjusted as appropriate according to the purpose.

In the present production method, it is preferable to use the crosslinking agent. By using the crosslinking agent, the aliphatic polyester-based resin in resulting expanded particles comes to have a crosslinked structure. In a case where the crosslinking agent is used in the present production method, an aspect of the present production method may be such that the crosslinking agent is used in the resin particle preparing step but is not used in the dispersing step (hereinafter also referred to as "aspect A"), may be such that the crosslinking agent is not used in the resin particle preparing step but is used in the dispersing step (hereinafter also referred to as "aspect B"), or may be such that the crosslinking agent is used in both the resin particle preparing step and the dispersing step (hereinafter also referred to as "aspect C").

The aspects A and C are described. In the resin particle preparing step, the resin composition containing the aliphatic polyester-based resin and the crosslinking agent is melted and kneaded. This makes it possible to obtain cross-linked aliphatic polyester-based resin particles containing the aliphatic polyester-based resin. In the resin particle preparing step, a method of preparing, in advance, the cross-linked aliphatic polyester-based resin particles containing the aliphatic polyester-based resin is not particularly limited to the above-described method and the like. Any of the methods disclosed in, for example, Japanese Patent Application Publication, Tokukai, No. 2009/061753 and Japanese Patent Application Publication, Tokukai, No. 2020/158613 can be employed.

In the case of the aspect A, the dispersing step can also be described as a step of, in the vessel, dispersing, into the aqueous dispersion medium, (a) the aliphatic polyester-based resin particles which contain the aliphatic polyester-based resin and which are cross-linked, (b) the blowing agent, and, as necessary, (c) the crosslinking agent, the dispersing agent, the crosslinking aid, the dispersing aid, and/or the plasticizer.

In the case of the aspect B, the dispersing step can also be described as a step of, in the vessel, dispersing, into the aqueous dispersion medium, (a) the aliphatic polyester-based resin particles containing the aliphatic polyester-based resin, (b) the blowing agent, (c) the crosslinking agent, and, as necessary, (c) the dispersing agent, the crosslinking aid, the dispersing aid, and/or the plasticizer.

In the case of the aspect C, the dispersing step can also be described as a step of, in the vessel, dispersing, into the aqueous dispersion medium, (a) the aliphatic polyester-based resin particles which contain the aliphatic polyester-based resin and which are cross-linked, (b) the blowing agent, (c) the crosslinking agent, and, as necessary, (c) the dispersing agent, the crosslinking aid, the dispersing aid, and/or the plasticizer.

In the case of the aspects B and C, the blowing agent and the crosslinking agent do not need to be added simultaneously in the dispersing step. For example, in the dispersing step, the crosslinking agent and the resin particles which are not cross-linked or the resin particles which are cross-linked are dispersed in the aqueous dispersion medium in the vessel to prepare the cross-linked resin particles. Thereafter, (i) the blowing agent may be dispersed in the vessel or (ii) the cross-linked resin particles in the vessel may be taken out and, in another vessel, the cross-linked resin particles and the blowing agent may be dispersed in the aqueous dispersion medium.

In the case of the aspect B, in the dispersing step, the crosslinking agent and the resin particles which contain the aliphatic polyester-based resin first react with each other in the aqueous dispersion medium, so that the aliphatic polyester-based resin particles which contain the aliphatic polyester-based resin and which are cross-linked are obtained. As a result, also in the dispersing step in the case of the aspect B, the dispersion slurry in which (a) the aliphatic polyester-based resin particles which contain the aliphatic polyester-based resin and which are cross-linked, (b) the blowing agent, and, as necessary, (c) the crosslinking agent, the dispersing agent, the crosslinking aid, the dispersing aid, and/or the plasticizer are dispersed in the aqueous dispersion medium is obtained as in the dispersing step in the case of the aspect A.

The crosslinking agent is not particularly limited, provided that the crosslinking agent can cross-link the aliphatic polyester-based resin. As the crosslinking agent, an organic peroxide is preferable. In other words, aliphatic polyester-based expanded particles are preferably cross-linked by an organic peroxide. The organic peroxide may be used (a) in the resin particle preparing step, (b) in the dispersing step, and (c) in the resin particle preparing step and the dispersing step. More specifically, in order to react the organic peroxide with the aliphatic polyester-based resin, (a) the organic peroxide and the aliphatic polyester-based resin may be melted and kneaded in the resin particle preparing step, (b) the resin particles and the organic peroxide may be dispersed in the aqueous dispersion medium in the dispersing step, and (c) the organic peroxide and the aliphatic polyester-based resin may be melted and kneaded, and further, the resin particles and the organic peroxide may be dispersed in the aqueous dispersion medium. In the dispersing step, the resin particles produced in the resin particle preparing step and the organic peroxide are dispersed in the aqueous dispersion medium, so that the resin particles can be impregnated and reacted with the organic peroxide. For these reasons, in the present production method, the crosslinking agent is preferably an organic peroxide. Note that, in a case where an organic peroxide is used as the crosslinking agent, the crosslinked structure is formed by direct binding of molecular chains of the aliphatic polyester-based resin (bypassing a structure derived from the crosslinking agent).

Depending on, for example, the type of the aliphatic polyester-based resin used, the organic peroxide used as the crosslinking agent is preferably an organic peroxide having a 1-hour half-life temperature of 90°C to 160°C and is more preferably an organic peroxide having a 1-hour half-life temperature of 115°C to 125°C. Specific examples of such an organic peroxide include benzoyl peroxide (1-hour half-life temperature: 92°C), t-butylperoxy-2-ethylhexyl carbonate (1-hour half-life temperature: 121°C), t-butylperoxyisopropyl carbonate (1-hour half-life temperature: 118°C), t-amylperoxy-2-ethylhexyl carbonate (1-hour half-life temperature: 117°C), t-amylperoxyisopropyl carbonate (1-hour half-life temperature: 115°C), t-butylperoxyisobutyrate (1-hour half-life temperature: 93°C), t-butylperoxy-2-ethylhexanoate (1-hour half-life temperature: 95°C), t-butylperoxyisononanoate (1-hour half-life temperature: 123°C), t-butylperoxyacetate (1-hour half-life temperature: 123°C), t-butylperoxydibenzoate (1-hour half-life temperature: 125°C), t-amylperoxyisobutyrate (1-hour half-life temperature: 93°C), t-amylperoxy-2-ethylhexanoate (1-hour half-life temperature: 92°C), t-amylperoxyisonanoate (1-hour half-life temperature: 114°C), t-amylperoxyacetate (1-hour half-life temperature: 120°C), t-amylperoxybenzoate (1-hour half-life temperature: 122°C), dicumyl peroxide (1-hour half-life temperature: 137°C), 2,5-dimethyl-2,5-di(t-butylperoxy)hexane (1-hour half-life temperature: 140°C), and di-t-butyl peroxide (1-hour half-life temperature: 149°C). The use of an organic peroxide having a 1-hour half-life temperature of not lower than 90°C has the advantage that expanded particles having a desired gel fraction tend to be obtained. On the other hand, the use of an organic peroxide having a 1-hour half-life temperature of not higher than 160°C has the advantage that an unreacted crosslinking agent is unlikely to remain in an end product.

The amount of the crosslinking agent used is not particularly limited. The amount of the crosslinking agent used is positively correlated with the gel fraction of resulting expanded particles. In other words, as the amount of the crosslinking agent used is increased, the gel fraction of resulting expanded particles tends to increase. Therefore, it is desirable to, in consideration of the gel fraction of resulting expanded particles, set the amount of the crosslinking agent used. As the amount of the crosslinking agent used becomes smaller, that is, as the gel fraction of resulting expanded particles becomes lower, the expanded particles tend to have a lower apparent density. In contrast, as the amount of the crosslinking agent used becomes larger, that is, as the gel fraction of resulting expanded particles becomes higher, the resulting expanded particles tend to have good moldability and good physical properties (for example, compressive strength, impact strength, heat resistance, and the like). An embodiment of the present invention has the advantage that, even in a case where a certain amount or more of the crosslinking agent is used, that is, even in a case where the gel fraction of resulting expanded particles is a certain value or more, the expanded particles can have a low apparent density. That is, an embodiment of the present invention has the advantage that it is possible to obtain expanded particles which have a low apparent density and which have good moldability and good physical properties.

The amount of the crosslinking agent used is, for example, preferably 1.6 parts by weight to 5.0 parts by weight, more preferably 1.7 parts by weight to 3.0 parts by weight, and even more preferably 1.8 parts by weight to 2.5 parts by weight, with respect to 100 parts by weight of the aliphatic polyester-based resin. In a case where the amount of the crosslinking agent used is not less than 1.6 parts by weight with respect to 100 parts by weight of the resin particles, it is possible to obtain expanded particles having a sufficient gel fraction (for example, 60% by weight). As a result, there is the advantage that the resulting expanded particles have good moldability and/or good physical properties (for example, compressive strength, impact strength, heat resistance, and the like). Note, here, that the "amount of the crosslinking agent used" in the present specification is intended to mean the amount of the crosslinking agent used in the resin particle preparing step in the aspect A, the amount of the crosslinking agent used in the dispersing step in the aspect B, and the total of the amount of the crosslinking agent used in the resin particle preparing step and the amount of the crosslinking agent used in the dispersing step in the aspect C. Note that, in a case where a commercially available product is used as the crosslinking agent, the amount of the crosslinking agent used means the amount of an organic peroxide contained in the commercially available product used.

In the present production method, the crosslinking aid may be used to improve the efficiency of cross-linking the aliphatic polyester-based resin. Examples of the crosslinking aid include compounds each having at least one unsaturated bond within a molecule. Among the compounds, allyl esters, acrylic esters, methacrylic esters, divinyl compounds, and the like are particularly preferable as the crosslinking aid. One of these crosslinking aids may be used alone, or two or more thereof may be used in admixture. In a case where two or more crosslinking aids are used in admixture, a mixing ratio may be adjusted as appropriate according to the purpose.

The amount of the crosslinking aid used is not particularly limited, and is preferably 0.01 parts by weight to 3.00 parts by weight, more preferably 0.03 parts by weight to 1.50 parts by weight, and even more preferably 0.05 parts by weight to 1.00 part by weight, with respect to 100 parts by weight of the resin particles. In a case where the amount of the crosslinking aid used is not less than 0.01 parts by weight with respect to 100 parts by weight of the resin particles, the crosslinking aid exerts a sufficient effect as the crosslinking aid.

When the resin particles are impregnated and reacted with the crosslinking agent and, as necessary, the crosslinking aid in the dispersing step, it is preferable to lower the concentration of oxygen in the vessel and the amount of oxygen dissolved in the dispersion slurry in order to increase the efficiency of cross-linking the aliphatic polyester-based resin. Examples of a method for reducing the concentration of oxygen in the vessel and the amount of oxygen dissolved in the dispersion slurry include: replacing a gas in the vessel and the gas dissolved in the dispersion slurry with an inorganic gas such as carbon dioxide and nitrogen; and vacuuming the gas in the vessel.

In the present production method, the plasticizer may be used. In a case where the plasticizer is used in the present production method, an aspect of the present production method may be such that the plasticizer is used in the resin particle preparing step but is not used in the dispersing step (hereinafter also referred to as "aspect D"), may be such that the plasticizer is not used in the resin particle preparing step but is used in the dispersing step (hereinafter also referred to as "aspect E"), or may be such that the plasticizer is used in both the resin particle preparing step and the dispersing step (hereinafter also referred to as "aspect F").

Examples of the plasticizer include: glycerin ester-based compounds such as glycerin diacetomonolaurate; citric ester-based compounds such as tributyl acetylcitrate; sebacic ester-based compounds such as dibutyl sebacate; adipic ester-based compounds; polyether ester-based compounds; benzoic ester-based compounds; phthalic ester-based compounds; isosorbide ester-based compounds; polycaprolactone-based compounds; and dibasic ester-based compounds such as benzyl methyl diethylene glycol adipate. Among these plasticizers, the glycerin ester-based compounds, the citric ester-based compounds, the sebacic ester-based compounds, and the dibasic acid ester-based compounds are preferable in that the effect of plasticizing the aliphatic polyester-based resin is excellent. One of these plasticizers may be used alone, or two or more thereof may be used in admixture. In a case where two or more plasticizers are used in admixture, a mixing ratio may be adjusted as appropriate according to the purpose.

The amount of the plasticizer used is not particularly limited. As the amount of the plasticizer used becomes larger, expanded particles having a lower apparent density tend to be obtained. In contrast, as the amount of the plasticizer used becomes smaller, a foamed molded product obtained by molding resulting expanded particles tends to have higher strength (for example, compressive strength). An embodiment of the present invention has the advantage that it is possible to obtain expanded particles having a low apparent density, without use of a large amount of the plasticizer. That is, an embodiment of the present invention has the advantage that it is possible to obtain expanded particles which have a low apparent density and which can provide a foamed molded product having good strength.

The amount of the plasticizer used is, for example, preferably not more than 4 parts by weight, more preferably not more than 3 parts by weight, even more preferably not more than 2 parts by weight, still even more preferably not more than 1 part by weight, and particularly preferably 0 parts by weight, with respect to 100 parts by weight of the aliphatic polyester-based resin. In other words, in the present production method, it is particularly preferable not to use the plasticizer. That is, in the present production method, it is preferable not to use the plasticizer or to use the plasticizer in an amount of more than 0 parts by weight and not more than 4 parts by weight with respect to 100 parts by weight of the aliphatic polyester-based resin. In a case where the amount of the crosslinking agent used is not more than 4 parts by weight with respect to 100 parts by weight of the resin particles, there is the advantage that it is possible to obtain expanded particles which can provide a foamed molded product having good strength. Note, here, that the "amount of the plasticizer used" in the present specification is intended to mean the amount of the plasticizer used in the resin particle preparing step in the aspect D, the amount of the plasticizer used in the dispersing step in the aspect E, and the total of the amount of the plasticizer used in the resin particle preparing step and the amount of the plasticizer used in the dispersing step in the aspect F.

(2-5. Temperature increasing and pressure increasing step and holding step)

The present production method preferably includes, following the dispersing step and between the dispersing step and the releasing step, a temperature increasing and pressure increasing step of increasing a temperature in the vessel to a certain temperature and increasing a pressure in the vessel to a certain pressure and a holding step of holding the temperature in the vessel at the certain temperature and holding the pressure in the vessel at the certain pressure.

The temperature increasing and pressure increasing step is preferably carried out after the dispersing step, and the holding step is preferably carried out after the temperature increasing and pressure increasing step. In the present specification, (a) the certain temperature in the temperature increasing and pressure increasing step and in the holding step may be referred to as an expansion temperature, and (b) the certain pressure in the temperature increasing and pressure increasing step and in the holding step may be referred to as an expansion pressure.

The expansion temperature cannot be generally defined because the expansion temperature varies depending on, for example, the type of the aliphatic polyester-based resin, the type of the blowing agent, the degree of plasticization of the aliphatic polyester-based resin, and a desired apparent density of expanded particles. For example, the expansion temperature is preferably 100.0°C to 140.0°C, more preferably 110.0°C to 135.0°C, and more preferably 115.0°C to 133.0°C. In a case where the expansion temperature is not lower than 100°C, expanded particles having a low apparent density tend to be obtained. On the other hand, in a case where the expansion temperature is not higher than 140°C, hydrolysis of the resin particles is unlikely to occur in the vessel.

In the temperature increasing and pressure increasing step, a rate at which the temperature is increased to a desired expansion temperature (hereinafter may be referred to as a temperature increase rate) is preferably 1.0°C/min to 3.0°C/min, and more preferably 1.5°C/min to 3.0°C/min. In a case where the temperature increase rate is not lower than 1.0°C/min, excellent productivity is achieved. In a case where the temperature increase rate is not higher than 3.0°C/min, insufficient impregnation of the resin particles with the blowing agent and insufficient reaction of the crosslinking agent and the aliphatic polyester-based resin are unlikely to occur at the increase in temperature.

The expansion pressure is preferably 1.0 MPa to 10.0 MPa (gauge pressure), more preferably 2.0 MPa to 5.0 MPa (gauge pressure), and more preferably 2.5 MPa to 4.0 MPa. In a case where the expansion pressure is not less than 1.0 MPa (gauge pressure), it is possible to obtain expanded particles having a low apparent density.

Note that, as the expansion pressure is increased, it is possible to obtain expanded particles having a lower apparent density. In a case where the expansion pressure is excessively high (for example, more than 4.0 MPa (gauge pressure)), a vessel which can withstand a higher pressure is needed, that is, expensive facilities are needed. Therefore, from the viewpoint of unnecessity of expensive facilities, the expansion pressure is preferably 1.0 MPa to 4.0 MPa (gauge pressure), more preferably 2.0 MPa to 3.7 MPa (gauge pressure), and more preferably 2.5 MPa to 3.5 MPa.

(2-6. Releasing step)

The releasing step is carried out after the dispersing step, and preferably after the temperature increasing and pressure increasing step or the holding step which are optionally carried out, following the dispersing step. The releasing step allows the resin particles to be expanded, with the result that expanded particles are obtained.

In the releasing step, the "area having a pressure lower than a pressure inside the vessel" is intended to mean an "area under pressure lower than the pressure inside the vessel" or a "space under pressure lower than the pressure inside the vessel", and can also be described as an "atmosphere having a pressure lower than the pressure inside the vessel". The area having a pressure lower than the pressure inside the vessel is not particularly limited, provided that the pressure is lower than the expansion pressure, and may be, for example, an area under atmospheric pressure. Further, in a case where the temperature increasing and pressure increasing step is carried out, the "pressure inside the vessel" in the releasing step can also be described as the "expansion pressure".

In the releasing step, when the dispersion slurry is released into the area having a pressure lower than the pressure inside the vessel, the dispersion slurry can also be released through an open orifice having a diameter of 1 mm to 5 mm for the purpose of, for example, adjusting the flow rate of the dispersion slurry and reducing variations in the apparent density of resulting expanded particles.

In the releasing step, the temperature in the area having a pressure lower than the pressure inside the vessel (hereinafter also simply referred to as "area") is set to 65°C to 95°C, and the amount of the steam in the area is set to 144 $g/m^3$ to 502 $g/m^3$. By setting the temperature in the area and the amount of the steam in the area to the above respective ranges, it is possible to obtain expanded particles having a low apparent density.

The temperature in the area is preferably 65°C to 95°C, more preferably 70°C to 93°C, even more preferably 75°C to 91°C, and particularly preferably 80°C to 90°C. This configuration has the advantage that expanded particles which have a low apparent density and in which no adhesion and no shrinkage are present or in which very little adhesion and very little shrinkage are present are obtained. Note that the temperature in the area can be adjusted by adjusting the amount of the steam introduced into the area, the amount of external air introduced into the area, the amount of air for transporting expanded particles, the temperature of the air for transporting the expanded particles, and the like.

The amount of the steam in the area is preferably 144 $g/m^3$ to 502 $g/m^3$, more preferably 178 $g/m^3$ to 468 $g/m^3$, even more preferably 217 $g/m^3$ to 437 $g/m^3$, and particularly preferably 263 $g/m^3$ to 421 $g/m^3$. This configuration has the advantage that expanded particles which have a low apparent density and in which no adhesion and no shrinkage are present or in which very little adhesion and very little shrinkage are present are obtained.

In the releasing step, a cleaning agent may be used after the resin particles have been expanded. Examples of the cleaning agent include warm water and sodium hexametaphosphate. The use of the cleaning agent makes it possible to adjust the amount of the dispersing agent adhering to the surfaces of expanded particles.

(2-7. Secondary expansion process)

As a method for obtaining expanded particles having a low apparent density, there is a method (process) in which expanded particles obtained through a series of steps from the dispersing step to the releasing step are further expanded. This step is also referred to as a "secondary expansion process". In a case where the secondary expansion process is carried out, the series of steps from the dispersing step to the releasing step may be referred to as a first expansion process, and expanded particles obtained in the first expansion process may be referred to as first expanded particles.

An example aspect of the secondary expansion process includes the following: (c1) expanded particles obtained in the expansion process are supplied into a vessel; (c2) an inorganic gas, such as air or carbon dioxide, is supplied into the vessel to increase a pressure in the vessel; (c3) by (c2) above, the expanded particles are impregnated with the inorganic gas to make pressures in the expanded particles higher than normal pressure; and (c4) then, the expanded particles are further expanded by heating with steam or the like to obtain the expanded particles having a desired apparent density.

As described above, the secondary expansion process is a complicated process. In a case where the secondary expansion process is carried out, not only the number of steps but also a production cost are increased. An embodiment of the present invention has the advantage that it is possible to provide expanded particles having a low apparent density, only by carrying out the first expansion process without carrying out the secondary expansion process.

The internal pressure of expanded particles in the secondary expansion process is preferably 0.15 MPa to 0.60 MPa (absolute pressure), and more preferably 0.20 MPa to 0.50 MPa (absolute pressure).

A temperature in the vessel when the expanded particles are impregnated with the inorganic gas in the secondary expansion process (in c2 and c3 above) is preferably 10°C to 90°C, more preferably 20°C to 90°C, more preferably 30°C to 90°C, and even more preferably 40°C to 90°C.

In the secondary expansion process (in c4 above), the pressure of the steam or the like for heating the expanded particles (hereinafter may be referred to as a "secondary expansion pressure") varies depending on the properties of the expanded particles used and a desired apparent density and cannot be generally defined. The secondary expansion pressure is preferably 0.01 MPa to 0.17 MPa (gauge pressure), and more preferably 0.03 MPa to 0.11 MPa (gauge pressure).

The gel fraction of the secondary expanded particles preferably has the same aspect as the gel fraction of the expanded particles. That is, the description in the section (Gel fraction) described above can be employed, as appropriate, for the gel fraction of the secondary expanded particles.

(2-8. Physical properties of aliphatic polyester-based expanded particles)

(Apparent density)

The apparent density of expanded particles is not particularly limited, but is preferably low. For example, the apparent density of the expanded particles is preferably 20 g/L to 64 g/L, preferably 22 g/L to 63 g/L, more preferably 25 g/L to 62 g/L, more preferably not less than 25 g/L and less than 62 g/L, more preferably 27 g/L to 61 g/L, more preferably 28 g/L to 60 g/L, and even more preferably 30 g/L to 59 g/L. This configuration makes it possible to obtain an aliphatic polyester-based foamed molded product which is light in weight and which has good strength (compressive strength).

(High temperature-side heat quantity)

The high temperature-side heat quantity of expanded particles is not limited, and is preferably 0.1 J/g to 20.0 J/g, more preferably 0.3 J/g to 18.0 J/g, and even more preferably 0.5 J/g to 15.0 J/g. This configuration makes it possible to eliminate adhesion of aliphatic polyester-based expanded particles obtained in the expansion process and cause the aliphatic polyester-based expanded particles to have excellent in-mold foam moldability. As the high temperature-side heat quantity of expanded particles becomes larger, the apparent density of the expanded particles tends to be high. As the high temperature-side heat quantity of expanded particles becomes smaller, the apparent density of the expanded particles tends to be low. The high temperature-side heat quantity of expanded particles can be controlled by adjusting a condition(s) (in particular, the expansion temperature and the expansion pressure) at the time of expansion and a parameter(s) such as time for which the resin particles are held in the vessel (for example, pressure-resistant vessel) before the expansion. For example, in a case where the expansion temperature is increased, the high temperature-side heat quantity tends to be smaller. In contrast, in a case where the expansion temperature is decreased, the high temperature-side heat quantity tends to be larger. This is because the amount of crystals which are not melted varies depending on the expansion temperature. Further, in a case where the expansion pressure is increased, the high temperature-side heat quantity tends to be smaller. In contrast, in a case where the expansion pressure is decreased, the high temperature-side heat quantity tends to be larger. This is because the degree of plasticization varies and the amount of crystals which are not melted varies, depending on the expansion pressure (the amount of the blowing agent). The high temperature-side heat quantity tends to be larger as the time for which the resin particles are held in the vessel before the expansion is made longer. This is because the amount of growth of crystals which are not melted varies depending on the time for which the resin particles are held in the vessel. A temperature at which the resin particles are held in the vessel before the expansion is generally similar to the expansion temperature.

(Gel fraction)

The gel fraction of expanded particles is not particularly limited, but is preferably high from the viewpoint of moldability and physical properties (for example, compressive strength, impact strength, heat resistance, and the like). For example, the gel fraction of expanded particles is preferably not less than 60% by weight, more preferably not less than 63% by weight, even more preferably not less than 67% by weight, and particularly preferably not less than 70% by weight.

[3. Aliphatic polyester-based expanded particles]

Aliphatic polyester-based expanded particles in accordance with an embodiment of the present invention (i) contain an aliphatic polyester-based resin, (ii) do not contain a plasticizer or contain the plasticizer in an amount of more than 0 parts by weight and not more than 4 parts by weight with respect to 100 parts by weight of the aliphatic polyester-based resin, (iii) have a gel fraction of not less than 60% by weight, and (iv) have an apparent density of not more than 64 g/L.

The present expanded particles can be suitably obtained by the production method described in the section [2. Method for producing aliphatic polyester-based expanded particles].

Each aspect (for example, the aliphatic polyester-based resin, the gel fraction, the apparent density, and the like) relating to the present expanded particles are the same as that described in the section [2. Method for producing aliphatic polyester-based expanded particles]. Thus, the description in the section is employed, and description of each aspect is omitted.

[4. Aliphatic polyester-based foamed molded product]

An aliphatic polyester-based foamed molded product in accordance with an embodiment of the present invention is obtained by molding aliphatic polyester-based expanded particles in accordance with an embodiment of the present invention. It can be said that the aliphatic polyester-based foamed molded product in accordance with an embodiment of the present invention is composed of aliphatic polyester-based expanded particles in accordance with an embodiment of the present invention. The aliphatic polyester-based foamed molded product in accordance with an embodiment of the present invention may contain aliphatic polyester-based expanded particles in accordance with an embodiment of the present invention. This configuration makes it possible to provide an aliphatic polyester-based foamed molded product having a low density.

A method for producing the present foamed molded product (i.e., a method for molding expanded particles) is not particularly limited, and a known method can be employed. Examples of such a method include, but are not particularly limited to, the following in-mold foam molding methods (A) to (D) :

(A) a method in which after the present expanded particles are pressurized with an inorganic gas in a vessel so that the expanded particles are impregnated with the inorganic gas and given a given internal pressure, the expanded particles are introduced to fill a mold therewith and heated with steam;
(B) a method in which the present expanded particles are introduced to fill a mold therewith, compressed to reduce the volume in the mold by 10% to 75%, and heated with steam;
(C) a method in which the present expanded particles are compressed with gas pressure, introduced to fill a mold therewith, and heated with steam while the recovery force of the expanded particles is utilized; and
(D) a method in which without any particular pretreatment, the present expanded particles are introduced to fill a mold therewith and heated with steam.

In production of the present foamed molded product, the pressure of steam for heating the present expanded particles (hereinafter may be referred to as a molding pressure) varies depending on the properties of the expanded particles used and the like and cannot be generally defined. The molding pressure is preferably 0.05 MPa to 0.30 MPa (gauge pressure), more preferably 0.08 MPa to 0.25 MPa (gauge pressure), and even more preferably 0.10 MPa to 0.20 MPa (gauge pressure).

As the inorganic gas in the method (A) among the production methods for the present foamed molded product, at least one selected from the group consisting of air, nitrogen, oxygen, carbon dioxide, helium, neon, argon, and the like can be used. Among these inorganic gases, air and/or carbon dioxide is preferable.

A temperature in the vessel when the expanded particles are impregnated with the inorganic gas in the method (A) among the production methods for the present foamed molded product is preferably 10°C to 90°C, more preferably 20°C to 90°C, more preferably 30°C to 90°C, and even more preferably 40°C to 90°C.

The internal pressure of the expanded particles in the method (A) among the production methods for the present foamed molded product is preferably 0.10 MPa to 0.30 MPa (absolute pressure), more preferably 0.11 MPa to 0.25 MPa (absolute pressure), and even more preferably 0.12 MPa to 0.20 MPa (absolute pressure). Measurement of the internal pressure of the expanded particles is carried out in accordance with the measurement method described in the Examples which will be described later.

The compressive strength of the present foamed molded product is not generally limited because the compressive strength varies depending on the type of the aliphatic polyester-based resin, the density of the foamed molded product, and the like. The compressive strength at 50% compression is preferably not less than 0.18 MPa, more preferably not less than 0.19 MPa, and even more preferably not less than 0.20 MPa. This configuration makes it possible to provide the aliphatic polyester-based foamed molded product that has high compressive strength.

The gel fraction of the present foamed molded product is high, similarly to that of the present expanded particles. The gel fraction of the foamed molded product tends to be significantly lower than the gel fraction of the expanded particles. It is inferred that this is because hydrolysis of the aliphatic polyester-based resin progresses at the time of molding and drying. However, an embodiment of the present invention is not limited to such an inference.

The density of the present foamed molded product is low, similarly to the apparent density of the present expanded particles. The density of the foamed molded product tends to be significantly lower than the apparent density of the expanded particles. It is inferred that this is because the expanded particles further expand due to heating at the time of molding. However, an embodiment of the present invention is not limited to such an inference.

The aliphatic polyester-based foamed molded product in accordance with an embodiment of the present invention may have the following configuration:

an aliphatic polyester-based foamed molded product which (i) contains an aliphatic polyester-based resin, (ii) does not contain a plasticizer or contains the plasticizer in an amount of more than 0 parts by weight and not more than 4 parts by weight with respect to 100 parts by weight of the aliphatic polyester-based resin, (iii) has a gel fraction of not less than 50% by weight, and (iv) has a density of not more than 44 g/L.

The above aliphatic polyester-based foamed molded product in accordance with an embodiment of the present invention can be suitably obtained by molding aliphatic polyester-based expanded particles obtained by the production method described in the section [2. Method for producing aliphatic polyester-based expanded particles] and/or the aliphatic polyester-based expanded particles described in the section [3. Aliphatic polyester-based expanded particles].

[5. Uses]

An embodiment of the present invention can be suitably used in the fields including: cushioning materials for packaging (for example, including: cushioning materials for packaging household electric appliances such as refrigerators, freezers, air conditioner bodies, outdoor units of air conditioner bodies, washing machines, air purifiers, humidifiers, rice cookers, microwave ovens, ovens, toasters, electric fans, and units for storage batteries; and cushioning materials for packaging automotive parts such as transmissions, roofs, hoods, doors, batteries, and engines); automotive components (for example, including bumper core materials, headrests, luggage boxes, tool boxes, floor spacers, seat core materials, child seat core materials, sun visor core materials, and kneepads); heat insulating materials (for example, including containers for constant-temperature storage and containers for constant-temperature transport); casting pattern applications; produce boxes; fish boxes; building materials; and civil engineering materials.

[Others]

Embodiments of the present invention may include the following configurations.
<1> A method for producing aliphatic polyester-based expanded particles, including:

a dispersing step of dispersing aliphatic polyester-based resin particles and a blowing agent into an aqueous dispersion medium, the aliphatic polyester-based resin particles containing an aliphatic polyester-based resin; and

a releasing step of releasing, by opening one end of the vessel, a dispersion slurry in the vessel into an area having a pressure lower than a pressure inside the vessel, wherein

a temperature in the area is 65°C to 95°C, and an amount of steam in the area is 144 $g/m^3$ to 502 $g/m^3$.

<2> The method according to <1>, wherein the aliphatic polyester-based resin includes a poly(3-hydroxyalkanoate)-based resin.

<3> The method according to <1> or <2>, wherein the aliphatic polyester-based resin includes polybutylene adipate terephthalate.

<4> The method according to any one of <1> to <3>, wherein the aliphatic polyester-based expanded particles have a gel fraction of not less than 60% by weight.

<5> The method according to any one of <1> to <4>, wherein, in the dispersing step, a crosslinking agent is further dispersed into the aqueous dispersion medium.

<6> The method according to any one of <1> to <5>, wherein, in the dispersing step, a plasticizer is not used or the plasticizer is used in an amount of more than 0 parts by weight and not more than 4 parts by weight with respect to 100 parts by weight of the aliphatic polyester-based resin.

<7> Aliphatic polyester-based expanded particles which (i) contain an aliphatic polyester-based resin, (ii) do not contain a plasticizer or contain the plasticizer in an amount of more than 0 parts by weight and not more than 4 parts by weight with respect to 100 parts by weight of the aliphatic polyester-based resin, (iii) have a gel fraction of not less than 60% by weight, and (iv) have an apparent density of not more than 64 g/L.

<8> The aliphatic polyester-based expanded particles according to <7>, wherein the aliphatic polyester-based resin includes a poly(3-hydroxyalkanoate)-based resin.

<9> The aliphatic polyester-based expanded particles according to <7> or <8>, wherein the aliphatic polyester-based resin includes polybutylene adipate terephthalate.

<10> An aliphatic polyester-based foamed molded product which is obtained by molding aliphatic polyester-based expanded particles described in any one of <7> to <9>.

<11> An aliphatic polyester-based foamed molded product which (i) contains an aliphatic polyester-based resin, (ii) does not contain a plasticizer or contains the plasticizer in an amount of more than 0 parts by weight and not more than 4 parts by weight with respect to 100 parts by weight of the aliphatic polyester-based resin, and (iii) has a gel fraction of not less than 50% by weight, and (iv) has a density of not more than 44 g/L.

Examples

The following description will discuss the present invention in more detail with reference to Examples. Note, however, that these Examples do not limit the technical scope of the present invention.

[Materials]

Substances used in Examples and Comparative Examples are presented below.

(Aliphatic polyester-based resin)

P3HA: P3HA prepared by a method in Production Example 1 described below.
PBAT: polybutylene succinate adipate (Ecoflex F Blend C1200 manufactured by BASF SE)

(Non-ionic water-soluble polymer)

Non-ionic water-soluble polymer: polyalkylene oxide (PLONON #208 manufactured by NOF CORPORATION, 80% by weight of ethylene oxide, average molecular weight: 10,000, hydrophobic group: oxypropylene group)

(Cell adjusting agent)

Cell adjusting agent: talc (Micro Ace K-1, manufactured by Nippon Talc Co., Ltd.)

(Nucleating agent)

Nucleating agent: pentaerythritol (Neulizer P manufactured by Mitsubishi Chemical Corporation)

(Lubricant)

Lubricant-1: behenic acid amide (Crodamide (registered trademark) BR manufactured by CRODA)
Lubricant-2: erucic acid amide (Crodamide (registered trademark) ER manufactured by CRODA)

(Dispersing agent)

Dispersing agent: tertiary calcium phosphate (manufactured by TAIHEI CHEMICAL INDUSTRIAL CO., LTD.)

(Dispersing aid)

Dispersing aid: sodium alkylsulfonate (LATEMUL (registered trademark) PS manufactured by Kao Corporation)

(Crosslinking agent)

Crosslinking agent: 1,1-di(t-butylperoxy)cyclohexane (PERHEXA (registered trademark) C-80(S) manufactured by NOF CORPORATION, purity: 80%)

(Cleaning agent)

Cleaning agent: sodium hexametaphosphate (manufactured by WUXI LOTUS ESSENCE)

(Antistatic agent)

Antistatic agent: coconut oil fatty acid diethanolamide (PROFAN 128 EXTRA manufactured by Sanyo Chemical Industries, Ltd.)

[Measurement methods]

Evaluation methods carried out in Examples and Comparative Examples are described below.

(Measurement of melting point of aliphatic polyester-based resin particles)

Approximately 5 mg of aliphatic polyester-based resin particles were weighed out with use of a differential scanning calorimeter (DSC7020 manufactured by Hitachi High-Tech Science Corporation). Then, in a DSC curve obtained when the temperature of the aliphatic polyester-based resin particles was increased from 10°C to 190°C at a temperature increase rate of 10°C/min, a temperature at the highest melting peak was regarded as a melting point.

(Measurement of MFR of aliphatic polyester-based resin particles)

With use of Melt Flow Index Tester (manufactured by Yasuda Seiki Seisakusho Ltd.), measurement was carried out in accordance with JIS K7210 under the conditions that a load was 5 kg and a measurement temperature was a temperature 5°C to 10°C higher than a melting end temperature as read from the DSC curve obtained in the above (Measurement of melting point of aliphatic polyester-based resin particles).

(Measurement of weight per aliphatic polyester-based resin particle)

After 100 aliphatic polyester-based resin particles were prepared, the weight Wp (mg) of the particles was measured. The weight per particle was determined by Wp/100 (mg).

(Measurement of temperature in low-pressure area and amount of steam in low-pressure area in releasing step)

With use of a humidity and temperature meter (HMT330 manufactured by VAISALA KK) and a probe, a temperature and a relative humidity in a low-pressure area were measured. Values of the measured temperature and the measured relative humidity were used to determine the amount of steam at the temperature.

(Measurement of apparent density of aliphatic polyester-based expanded particles)

A method for measuring the apparent density of aliphatic polyester-based expanded particles was as in (1) to (3) below. (1) A graduated cylinder containing ethanol was prepared, and aliphatic polyester-based expanded particles of a weight Wd (g) were submerged in the ethanol. (2) The volume of the aliphatic polyester-based expanded particles read from an elevation of the liquid level of the ethanol (submersion method) was regarded as Vd (cm$^3$). (3) The apparent density $\rho$d of the aliphatic polyester-based expanded particles was calculated by the following formula:

$$\text{Apparent density } \rho d \text{ (g/L)} = (Wd/Vd) \times 1{,}000.$$

(Evaluation of apparent density of aliphatic polyester-based expanded particles)

The apparent density of aliphatic polyester-based expanded particles was evaluated in accordance with the following criteria.

Good (G): the apparent density of aliphatic polyester-based expanded particles was not more than 64 g/L.
Poor (P): the apparent density of aliphatic polyester-based expanded particles was more than 64 g/L.

(Evaluation of adhesion of aliphatic polyester-based expanded particles)

Adhesion of aliphatic polyester-based expanded particles was evaluated in accordance with the following criteria.

Good (G): in 100 g of aliphatic polyester-based expanded particles, the weight of two or more expanded particles which adhered to each other was less than 1 g.
Poor (P): in 100 g of aliphatic polyester-based expanded particles, the weight of two or more expanded particles which adhered to each other was not less than 1 g.

(Measurement of rate of shrinkage of aliphatic polyester-based expanded particles)

A method for measuring the rate of shrinkage of aliphatic polyester-based expanded particles was as in (1) to (7) below. (1) After a graduated cylinder type 300-ml vessel for vacuum was prepared, aliphatic polyester-based expanded particles of a weight Wbd (g) were introduced into the vessel. (2) The volume Vat (cm$^3$) of the aliphatic polyester-based expanded particles was read. (3) The bulk density BD of the aliphatic polyester-based expanded particles under atmospheric pressure was calculated by the following formula:

bulk density BD (g/cm$^3$) under atmospheric pressure = Wbd/Vat.

(4) The vessel containing the aliphatic polyester-based expanded particles was brought under reduced pressure with use of a vacuum pump. (5) The volume Vvc (cm$^3$) of the aliphatic polyester-based expanded particles under reduced pressure was read. (6) The bulk density VBD of the aliphatic polyester-based expanded particles under reduced pressure was calculated by the following formula:

$$\text{bulk density VBD (g/cm}^3\text{) under reduced pressure} = \text{Wbd/Vvc.}$$

(7) The rate of shrinkage of the aliphatic polyester-based expanded particles was calculated by the following formula:

$$\text{rate of shrinkage (\%)} = (1-(\text{VBD/BD})) \times 100.$$

(Evaluation of shrinkage of aliphatic polyester-based expanded particles)

On the basis of a rate of shrinkage, shrinkage of aliphatic polyester-based expanded particles was evaluated in accordance with the following criteria.

Good (G): the rate of shrinkage of aliphatic polyester-based expanded particles was less than 5%.
Acceptable (A): the rate of shrinkage of aliphatic polyester-based expanded particles was 5% to 10%.
Poor (P): the rate of shrinkage of aliphatic polyester-based expanded particles was more than 10%.

(Measurement of gel fraction of aliphatic polyester-based expanded particles)

A method for measuring the gel fraction of aliphatic polyester-based expanded particles was as in (1) to (5) below.

(1) Into a 100-ml flask, 0.5 g of aliphatic polyester-based expanded particles and 50 ml of chloroform were introduced. (2) A mixture in the flask was heat-refluxed for 8 hours at 62°C under atmospheric pressure. (3) A resulting heat-treated product was filtered with use of a suction filtration device equipped with a 100-mesh metal gauze. (4) A filtration-treated product on the metal gauze was dried in an oven at 80°C for 8 hours under a vacuum condition, and the weight Wg (g) of a resulting dried product was measured. (5) The gel fraction was calculated by the following formula:

$$\text{gel fraction (\% by weight)} = (\text{Wg/0.5}) \times 100.$$

(Measurement of high temperature-side heat quantity of aliphatic polyester-based expanded particles)

The high temperature-side heat quantity of aliphatic polyester-based expanded particles was measured with use of a differential scanning calorimeter (DSC7020 manufactured by Hitachi High-Tech Science Corporation). A specific operating procedure was as in (1) to (5) below. (1) Approximately 5 mg of aliphatic polyester-based expanded particles were weighed out. (2) By increasing the temperature of the aliphatic polyester-based expanded particles from 10°C to 190°C at a temperature increase rate of 10°C/min, the aliphatic polyester-based expanded particles were melted. (3) On a DSC curve obtained in the above process in (2), a point representing a temperature before the melting started and a point representing a temperature after the melting ended were connected to create a baseline. (4) A straight line passing through a maximum point between a melting peak on the high temperature side or the highest melting peak and a melting peak adjacent thereto was drawn in a direction perpendicular to the X-axis. (5) A heat quantity calculated from a high temperature side area enclosed by the baseline, the straight line passing through the maximum point, and the DSC curve was regarded as the high temperature-side heat quantity.

(Measurement of internal pressure of aliphatic polyester-based expanded particles)

A method for measuring the internal pressure of aliphatic polyester-based expanded particles was as in (1) to (5) below. (1) The weight W1 (g) of aliphatic polyester-based expanded particles after a pressurizing process was measured. (2) The expanded particles were heated at 150°C for 30 minutes to dissipate an inorganic gas in the expanded particles. (3) The weight W2 (g) of the aliphatic polyester-based expanded particles having undergone dissipation of the inorganic gas was measured again. (4) The weight (△W) of the inorganic gas was calculated from a weight difference (W1-W2) between the aliphatic polyester-based expanded particles before the dissipation of the inorganic gas and the aliphatic polyester-based expanded particles after the dissipation of the inorganic gas. (5) The internal pressure P (MPa) of the aliphatic polyester-based expanded particles was calculated by the state equation of ideal gas (specifically, the following formula):

internal pressure P (MPa) = (1 + ΔW/M × 0.082 × (273 + T) × (ρd × 1,000/W2))/9.87, wherein M is an average molar molecular weight, T is a temperature (room temperature) (°C) when the weight of the aliphatic polyester-based expanded particles after the pressurizing process was measured, and ρd is the apparent density (g/cm$^3$) of the aliphatic polyester-based expanded particles (expanded particles of the weight W1) after the pressurizing process.

(Measurement of density of aliphatic polyester-based foamed molded product)

A method for measuring the density of an aliphatic polyester-based foamed molded product was as in (1) to (4) below. (1) With use of a digital vernier caliper (manufactured by Mitutoyo Corporation), the lengths (mm) of an obtained aliphatic polyester-based foamed molded product in longitudinal, lateral, and thickness directions thereof were measured, and the volume V (cm$^3$) of the aliphatic polyester-based foamed molded product was calculated. (2) The weight W (g) of the foamed molded product was measured. (3) The density ρ of the aliphatic polyester-based foamed molded product was calculated on the basis of the following formula:

$$\text{density } \rho \text{ (g/L)} = (W/V) \times 1{,}000{,}000.$$

(Measurement of gel fraction of aliphatic polyester-based foamed molded product)

A method for measuring the gel fraction of an aliphatic polyester-based foamed molded product was as in (1) to (6) below. (1) a rectangular parallelepiped which measured 5 mm long by 5 mm wide by 5 mm high and which weighed 0.5 g was cut out such that the rectangular parallelepiped did not include a surface of an aliphatic polyester-based foamed molded product. (2) Into a 100-ml flask, 0.5 g of the rectangular parallelepiped cut out from the aliphatic polyester-based foamed molded product and 50 ml of chloroform were introduced. (3) A mixture in the flask was heat-refluxed for 8 hours at 62°C under atmospheric pressure. (4) A resulting heat-treated product was filtered with use of a suction filtration device equipped with a 100-mesh metal gauze. (5) A filtration-treated product on the metal gauze was dried in an oven at 80°C for 8 hours under a vacuum condition, and the weight Wgm (g) of a resulting dried product was measured. (6) A gel fraction was calculated by the following formula:

$$\text{gel fraction (\% by weight)} = (Wgm/0.5) \times 100.$$

(Measurement of compressive strength of aliphatic polyester-based foamed molded product)

A method for measuring the compressive strength of an aliphatic polyester-based foamed molded product was as follows. The compressive strength at 50% strain was determined in accordance with JIS K 6767 with use of a tensile and compression testing machine (TG-50kN manufactured by Minebea Co., Ltd.).

[Production Example 1] Preparation of P3HA

P3HA was prepared by the method disclosed in International Publication No. WO 2018/070492. At this time, 1 part by weight of the non-ionic water-soluble polymer (PLONON #208 manufactured by NOF CORPORATION) was used with respect to 100 parts by weight of the P3HA. A resulting P3HA contained (a) P3HB3HH in which a monomer ratio 3HB/3HH was 95/5 (mol%/mol%) and which had a weight average molecular weight of 0.6 million and (b) 1 part by weight of the non-ionic water-soluble polymer with respect to 100 parts by weight of the P3HB3HH.

[Example 1]

(Production of aliphatic polyester-based resin particles)

The P3HA was used, weighing was carried out so that the P3HA was 100 parts by weight, the cell adjusting agent was 0.10 parts by weight, the nucleating agent was 1.0 part by weight, the lubricant-1 was 0.30 parts by weight, and the lubricant-2 was 0.30 parts by weight, and a mixture was obtained with use of Supermixer (SMV (G)-100 manufactured by Kawata MFG Co., Ltd.). The mixture was melted and kneaded at a cylinder setting temperature of 130°C to 160°C with use of a twin screw extruder (TEM-26SX manufactured by Toshiba Machine Co., Ltd.) and discharged from a nozzle of a die attached to an extreme end of the extruder. A melted P3HA-based composition at 179°C which had been discharged from the nozzle was water-cooled at 43°C, and then a trace amount of the antistatic agent which had been water-diluted was applied to a surface of a strand of the P3HA-based composition (100 parts by weight). After that, the strand was cut. Resulting aliphatic polyester-based resin particles weighed 1.6 mg per particle, had a melting point of 145°C, and an MFR of 2.3 g/10 min as measured at 160°C under 5 kgf after dried at 80°C.

(Production of aliphatic polyester-based expanded particles)

After 100 parts by weight of the resulting aliphatic polyester-based resin particles, 200 parts by weight of pure water, 1.0 part by weight of the dispersing agent, 0.1 parts by weight of the dispersing aid, and 2.7 parts by weight of the crosslinking agent were introduced in a pressure-resistant vessel under stirring, aeration with carbon dioxide was sufficiently carried out so that oxygen in the pressure-resistant vessel was removed. Next, carbon dioxide was introduced as a blowing agent into the pressure-resistant vessel. Subsequently, the temperature of a dispersion slurry in the pressure-resistant vessel was increased to an expansion temperature of 128.5°C. Then, additional carbon dioxide was introduced to increase a pressure to an expansion pressure of 3.3 MPa (gauge pressure). The temperature and the pressure were held at around the expansion temperature and the expansion pressure, respectively, for 40 minutes. Thereafter, a valve at a lower part of the pressure-resistant vessel was opened so that the dispersion slurry in the pressure-resistant vessel was released, through an opening orifice having a diameter of 3.6 mm, into an area which had a pressure (specifically, atmospheric pressure) lower than a pressure in the vessel, in which a temperature was 90°C, and in which the amount of steam was 379 g/m$^3$ (releasing step). As a result, aliphatic polyester-based expanded particles were obtained. The dispersing agent adhering to the surfaces of the expanded particles was removed to some extent with the cleaning agent which had been water-diluted and warm water, and drying was carried out at 80°C. At this time, a trace amount of the antistatic agent which had been water-diluted was sprayed to the aliphatic polyester-based expanded particles to inhibit the electrostatics of the aliphatic polyester-based expanded particles. The resulting aliphatic polyester-based expanded particles had an apparent density of 58 g/L, a gel fraction of 73% by weight, and a high temperature-side heat quantity of 5 J/g. The resulting aliphatic polyester-based expanded particles were evaluated as "G" regarding adhesion, and were evaluated as "A" regarding shrinkage. The composition of, the production method for, and the physical properties of the aliphatic polyester-based expanded particles were summarized in Table 1.

(Production of aliphatic polyester-based foamed molded product)

The resulting aliphatic polyester-based expanded particles were introduced into a pressure-resistant vessel heated to 80°C, and the internal pressure of the aliphatic polyester-based expanded particles was set to 0.16 MPa (absolute pressure) by a pressurization treatment with air. The expanded particles were introduced to fill a mold measuring 370 mm long by 320 mm wide by 60 mm thick in a molding machine (EP-900L-M5 manufactured by DAISEN) therewith. Next, the aliphatic polyester-based expanded particles were heated for 5 seconds to 10 seconds by heated steam at a pressure of 0.15 MPa (gauge pressure) to obtain an aliphatic polyester-based foamed molded product. After that, the foamed molded product was dried at 75°C. The results of evaluations on the aliphatic polyester-based foamed molded product are summarized in Table 1.

[Examples 2 and 3 and Comparative Examples 1 to 6]

Aliphatic polyester-based expanded particles and an aliphatic polyester-based foamed molded product were prepared by the same method as that in Example 1 except that, in the releasing step, a dispersion slurry in a pressure-resistant vessel was released into an area which had a pressure (specifically, atmospheric pressure) lower than a pressure inside the vessel and in which a temperature and the amount of steam were under the conditions shown in Table 1. Then, the same evaluations as those in Example 1 were carried out. The production method for and the physical properties of the expanded particles and the results of evaluations on the foamed molded product were summarized in Table 1.

[Example 4]

Aliphatic polyester-based expanded particles and an aliphatic polyester-based foamed molded product were prepared by the same method as that in Example 2 except that the aliphatic polyester-based expanded particles were produced with use of a mixture of 90 parts by weight of the P3HA and 10 parts by weight of the PBAT instead of 100 parts by weight of the P3HA. Then, the same evaluations as those in Example 1 were carried out. The production method for and the physical properties of the expanded particles and the results of evaluations on the foamed molded product were summarized in Table 1.

[Comparative Example 7]

Aliphatic polyester-based expanded particles and an aliphatic polyester-based foamed molded product were prepared by the same method as that in Example 1 except that (i) the aliphatic polyester-based expanded particles were produced with use of a mixture of 90 parts by weight of the P3HA and 10 parts by weight of the PBAT instead of 100 parts by weight of the P3HA and (ii) in the releasing step, a dispersion slurry in a pressure-resistant vessel was released into an area which had a pressure lower than a pressure inside the vessel and in which a temperature and the amount of steam were under the conditions shown in Table 1. Then, the same evaluations as those in Example 1 were carried out. The production method for and the physical properties of the expanded particles and the results of evaluations on the foamed molded product were summarized in Table 1.

[Table 1]

(Table 1)

| | | | Example 1 | Example 2 | Example 3 | Example 4 |
|---|---|---|---|---|---|---|
| Aliphatic polyester-based resin | P3HA | Parts by weight | 100 | 100 | 100 | 90 |
| | PBAT | | - | - | - | 10 |
| Conditions of area | Temperature | °C | 90 | 80 | 70 | 80 |
| | Amount of steam | g/m$^3$ | 379 | 277 | 187 | 277 |
| Expanded particles | Apparent density | g/L | 58 | 57 | 62 | 61 |
| | | - | G | G | G | G |
| | Adhesion | - | G | G | G | G |
| | Shrinkage | - | A | G | G | G |
| | Gel fraction | % by weight | 73 | 73 | 73 | 76 |
| | High temperature-side heat quantity | J/g | 5 | 5 | 5 | 5 |
| Foamed molded product | Density | g/L | 38 | 40 | 42 | 41 |
| | Gel fraction | % by weight | 65 | 65 | 65 | 67 |
| | Compressive strength | MPa | 0.21 | 0.22 | 0.23 | 0.19 |

[Table 1 (continued)]

(Table 1)

| | | | Comparative Example 1 | Comparative Example 2 | Comparative Example 3 | Comparative Example 4 |
|---|---|---|---|---|---|---|
| Aliphatic polyester-based resin | P3HA | Parts by weight | 100 | 100 | 100 | 100 |
| | PBAT | | - | - | - | - |
| Conditions of area | Temperature | °C | 100 | 100 | 80 | 80 |
| | Amount of steam | g/m$^3$ | 590 | 6 | 6 | 141 |

(continued)

| | | | Comparative Example 1 | Comparative Example 2 | Comparative Example 3 | Comparative Example 4 |
|---|---|---|---|---|---|---|
| Expanded particles | Apparent density | g/L | 105 | 72 | 74 | 65 |
| | | - | P | P | P | P |
| | Adhesion | - | P | G | G | G |
| | Shrinkage | - | P | G | G | G |
| | Gel fraction | % by weight | 73 | 73 | 73 | 73 |
| | High temperature-side heat quantity | J/g | 5 | 5 | 5 | 5 |
| Foamed molded product | Density | g/L | - | 51 | 52 | 45 |
| | Gel fraction | % by weight | - | - | - | - |
| | Compressive strength | MPa | - | - | - | - |

[Table 1 (continued)]

(Table 1)

| | | | Comparative Example 5 | Comparative Example 6 | Comparative Example 7 |
|---|---|---|---|---|---|
| Aliphatic polyester-based resin | P3HA | Parts by weight | 100 | 100 | 90 |
| | PBAT | | - | - | 10 |
| Conditions of area | Temperature | °C | 63 | 100 | 63 |
| | Amount of steam | g/m³ | 147 | 147 | 145 |
| Expanded particles | Apparent density | g/L | 66 | 65 | 69 |
| | | - | P | P | P |
| | Adhesion | - | G | G | G |
| | Shrinkage | - | G | G | G |
| | Gel fraction | % by weight | 73 | 73 | 76 |
| | High temperature-side heat quantity | J/g | 5 | 5 | 5 |
| Foamed molded product | Density | g/L | 46 | 45 | 49 |
| | Gel fraction | % by weight | - | - | - |
| | Compressive strength | MPa | - | - | - |

Industrial Applicability

The present invention can be suitably used in the fields including: cushioning materials for packaging (for example, including: cushioning materials for packaging household electric appliances such as refrigerators, freezers, air conditioner bodies, outdoor units of air conditioner bodies, washing machines, air purifiers, humidifiers, rice cookers, microwave ovens, ovens, toasters, electric fans, and units for storage batteries; and cushioning materials for packaging automotive parts such as transmissions, roofs, hoods, doors, batteries, and engines); automotive components (for example, including bumper core materials, headrests, luggage boxes, tool boxes, floor spacers, seat core materials, child seat core materials, sun visor core materials, and kneepads); heat insulating materials (for example, including containers for constant-temperature storage and containers for constant-temperature transport); casting pattern applications; produce boxes; fish boxes; building materials; and civil engineering materials.

**Claims**

1. A method for producing aliphatic polyester-based expanded particles, comprising:

    a dispersing step of, in a vessel, dispersing aliphatic polyester-based resin particles and a blowing agent into an aqueous dispersion medium, the aliphatic polyester-based resin particles containing an aliphatic polyester-based resin; and
    a releasing step of releasing, by opening one end of the vessel, a dispersion slurry in the vessel into an area having a pressure lower than a pressure inside the vessel, wherein
    a temperature in the area is 65°C to 95°C, and an amount of steam in the area is 144 g/m$^3$ to 502 g/m$^3$.

2. The method according to claim 1, wherein the aliphatic polyester-based resin includes a poly(3-hydroxyalkanoate)-based resin.

3. The method according to claim 1 or 2, wherein the aliphatic polyester-based resin includes polybutylene adipate terephthalate.

4. The method according to claim 1 or 2, wherein the aliphatic polyester-based expanded particles have a gel fraction of not less than 60% by weight.

5. The method according to claim 1 or 2, wherein a crosslinking agent is further used.

6. The method according to claim 1 or 2, wherein a plasticizer is not used or the plasticizer is used in an amount of more than 0 parts by weight and not more than 4 parts by weight with respect to 100 parts by weight of the aliphatic polyester-based resin.

7. Aliphatic polyester-based expanded particles which

    (i) comprise an aliphatic polyester-based resin, (ii) do not comprise a plasticizer or comprise the plasticizer in an amount of more than 0 parts by weight and not more than 4 parts by weight with respect to 100 parts by weight of the aliphatic polyester-based resin,
    (iii) have a gel fraction of not less than 60% by weight, and (iv) have an apparent density of not more than 64 g/L.

8. The aliphatic polyester-based expanded particles according to claim 7, wherein the aliphatic polyester-based resin includes a poly(3-hydroxyalkanoate)-based resin.

9. The aliphatic polyester-based expanded particles according to claim 7, wherein the aliphatic polyester-based resin includes polybutylene adipate terephthalate.

10. An aliphatic polyester-based foamed molded product which is obtained by molding aliphatic polyester-based expanded particles recited in any one of claims 7 to 9.

11. An aliphatic polyester-based foamed molded product which

    (i) comprises an aliphatic polyester-based resin, (ii) does not comprise a plasticizer or comprises the plasticizer in an amount of more than 0 parts by weight and not more than 4 parts by weight with respect to 100 parts by weight of the aliphatic polyester-based resin, and
    (iii) has a gel fraction of not less than 50% by weight, and (iv) has a density of not more than 44 g/L.

## INTERNATIONAL SEARCH REPORT

| International application No. |
|---|
| **PCT/JP2023/037951** |

| A. | CLASSIFICATION OF SUBJECT MATTER |
|---|---|

*C08J 9/18*(2006.01)i
FI:   C08J9/18 CFD

According to International Patent Classification (IPC) or to both national classification and IPC

| B. | FIELDS SEARCHED |
|---|---|

Minimum documentation searched (classification system followed by classification symbols)

C08J9/00-9/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-102730 A (KANEKA CORP) 07 July 2022 (2022-07-07) | 7-10 |
|   | paragraph [0041], example 4, table 1 | |
| A |   | 1-6, 11 |
| X | JP 2022-104389 A (KANEKA CORP) 08 July 2022 (2022-07-08) | 7-11 |
|   | paragraph [0040], example 1, table 1 | |
| A |   | 1-6 |
| X | JP 2002-96323 A (JSP CORP) 02 April 2002 (2002-04-02) | 7, 10-11 |
|   | examples 1-2, 4, tables 1-2 | |
| A |   | 1-6, 8-9 |
| X | JP 10-324766 A (JSP CORP) 08 December 1998 (1998-12-08) | 7, 10 |
|   | paragraph [0018], example 3, table 1 | |
| A |   | 1-6, 8-9, 11 |

[✓] Further documents are listed in the continuation of Box C.      [✓] See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 January 2024** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

23

**INTERNATIONAL SEARCH REPORT**

| International application No. |
| --- |
| **PCT/JP2023/037951** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/146555 A1 (KANEKA CORP) 01 August 2019 (2019-08-01)<br>entire text | 1-11 |
| A | WO 2021/002092 A1 (KANEKA CORP) 07 January 2021 (2021-01-07)<br>entire text | 1-11 |
| A | JP 2003-3001 A (JSP CORP) 08 January 2003 (2003-01-08)<br>entire text | 1-11 |
| A | JP 2004-2597 A (JSP CORP) 08 January 2004 (2004-01-08)<br>entire text | 1-11 |
| A | JP 2003-231770 A (JSP CORP) 19 August 2003 (2003-08-19)<br>entire text | 1-11 |
| A | JP 2004-67945 A (JSP CORP) 04 March 2004 (2004-03-04)<br>entire text | 1-11 |

Form PCT/ISA/210 (second sheet) (July 2022)

**INTERNATIONAL SEARCH REPORT**
Information on patent family members

International application No.

**PCT/JP2023/037951**

| Patent document cited in search report | | | Publication date (day/month/year) | Patent family member(s) | | | Publication date (day/month/year) |
|---|---|---|---|---|---|---|---|
| JP | 2022-102730 | A | 07 July 2022 | (Family: none) | | | |
| JP | 2022-104389 | A | 08 July 2022 | (Family: none) | | | |
| JP | 2002-96323 | A | 02 April 2002 | (Family: none) | | | |
| JP | 10-324766 | A | 08 December 1998 | US column 4, lines 64-67, example 3, table 1 | 6110983 | A | |
| | | | | WO | 1998/054244 | A1 | |
| | | | | EP | 989159 | A1 | |
| | | | | TW | 512158 | B | |
| | | | | KR | 10-0639542 | B1 | |
| | | | | JP | 2001-106821 | A | |
| WO | 2019/146555 | A1 | 01 August 2019 | US entire text | 2020/0354539 | A1 | |
| | | | | EP | 3744771 | A1 | |
| | | | | CN | 111684001 | A | |
| WO | 2021/002092 | A1 | 07 January 2021 | US entire text | 2022/0289927 | A1 | |
| | | | | EP | 3995532 | A1 | |
| | | | | CN | 114026161 | A | |
| JP | 2003-3001 | A | 08 January 2003 | (Family: none) | | | |
| JP | 2004-2597 | A | 08 January 2004 | US entire text | 2003/0119928 | A1 | |
| | | | | EP | 1275687 | A2 | |
| | | | | CN | 1396205 | A | |
| JP | 2003-231770 | A | 19 August 2003 | (Family: none) | | | |
| JP | 2004-67945 | A | 04 March 2004 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146555 A
- WO 2021002092 A
- WO 2016147775 A
- WO 2019142717 A
- WO 2010067543 A
- WO 2018070492 A
- JP 2009061753 A
- JP 2020158613 A

**Non-patent literature cited in the description**

- **T. FUKUI** ; **Y. DOI**. *J. Bateriol.*, 1997, vol. 179, 4821-4830